# EUROPEAN PATENT SPECIFICATION

(11) **EP 1 420 049 B1**
(45) Date of publication and mention of the grant of the patent: **21.04.2010**
(21) Application number: 02747714.0
(22) Date of filing: 23.07.2002
(51) Int. Cl.: C09C 3/08, C09C 3/10, C09C 1/30

(54) **SURFACE-TREATED INORGANIC PARTICLES**
OBERFLÄCHENBEHANDELTE ANORGANISCHE PARTIKEL
PARTICULES INORGANIQUES TRAITEES EN SURFACE

(30) Priority: 24.07.2001 JP 2001222993; 25.07.2001 JP 2001224955
(43) Date of publication of application: 19.05.2004
(73) Proprietor: KANEKA CORPORATION, Osaka-shi, Osaka 530-8288 (JP)
(72) Inventor: SUZUKI, Noriyuki, Kawanishi-shi, Hyogo 666-0115 (JP); HARA, Kazuhiro, Takarazuka-shi, Hyogo 655-0812 (JP); ONO, Yoshitaka, Settsu-shi, Osaka 566-0072 (JP); NAKANO, Kimihiko, Tarumi-ku, Kobe-shi, Hyogo 655-0006 (JP)
(74) Representative: Vossius & Partner
(86) International application number: PCT/JP2002/007403
(87) International publication number: WO 2003/010245

(56) References cited:
- EP-A1- 1 103 173
- JP-A- 3 097 763
- JP-A- 9 272 817
- JP-A- 9 302 142
- JP-A- 11 293 143
- US-A- 5 234 496

## Description

The present invention relates to surface-treated inorganic particles. Also disclosed herein is a method for producing surface-treated inorganic particles, which comprises treating the surface of an inorganic matter by kneading a system containing inorganic particles and a treating agent using a kneader.

As a method for surface treatment of inorganic particles, there have hitherto been employed (1) a solvent method comprising dissolving a treating agent in an organic solvent containing water, or water and an optional solvent for hydrolysis, and mixing inorganic particles and the treating agent in the solvent while agitating using an agitator, and (2) a spray method comprising directly spraying a treating agent, or a treating agent diluted with a solvent while vigorously agitating.

According to the method (1), it requires a long time and much cost to treat a large amount of the solvent. Particularly, in case inorganic particles are made of a swellable layered material, it becomes difficult to mixing while agitating because of an increase in viscosity of the system, and thus the proportion of inorganic particles must be decreased so as to enable agitation, resulting in poor productivity.

The method (2) is excellent in treatment of the solvent and productivity as compared with the method (1), but is insufficient in quality because of non-uniform surface treatment.

Layered materials, which are inorganic particles such as talc and mica, have widely been used as fillers or reinforcers for the purpose of improving rigidity, mechanical properties, and physical properties such as heat deformation properties of polyester and polyamide resins. It is generally said that the effect is more effective as the layered materials are dispersed more uniformly and finely. With regard to a swellable layered material among layered materials, a technique of intercalating a polymeric compound (intercalant polymer) such as polyvinyl pyrrolidone into layers of the layered material to form an intercalation compound (Japanese Unexamined Patent Publication (Kokai) No. 9-118518) is disclosed as a technique capable of easily dispersing the layered material by making it easier to exfoliate layers. However, the above invention is insufficient in the effect of finely dispersing the swellable layered material in polyester and polyamide resins, and therefore an improvement has been required.

Disclosed herein is a method for producing surface-treated inorganic particles, which does not require a large amount of a solvent and may not impair quality of the surface treatment, and also achieves high productivity.

An object of the present invention is to solve the above problems and to provide a surface-treated layered material which can be dispersed more uniformly, as a reinforcer or modifier for polyester and polyamide resins, as compared with a layered material of the prior art.

The method for producing surface-treated inorganic particles comprises the step of kneading a system containing inorganic particles and a treating agent.

The system further preferably contains a solvent.

The solvent is preferably water or a polar solvent containing water.

The inorganic particles preferably comprise a layered material.

The layered material is preferably a swellable layered material.

The layered material is preferably a layered silicate.

The present invention is directed to surface-treated inorganic particles comprising a polyether compound and inorganic particles whose surface is treated with said polyether compound, wherein said polyether compound satisfies at least one condition of these conditions: (a) said polyether compound has a cyclic hydrocarbon group, and (b) said polyether compound has a hydroxyl value of 30 mg KOH/g or less, wherein the polyether compound is represented by the following general formula (2): 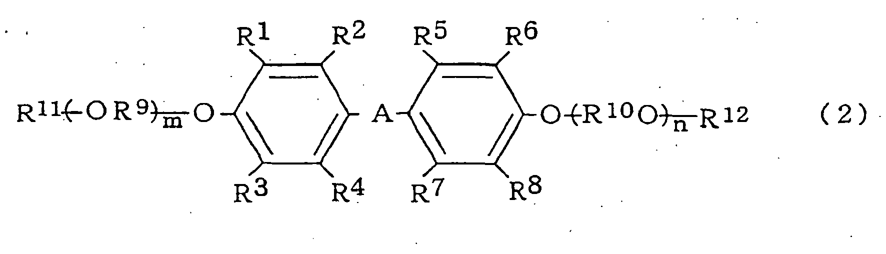 wherein -A- represents -O-, -S-, -SO-, -SO₂-, -CO-, an alkylene group having 1 to 20 carbon atoms, or an alkylidene group having 6 to 20 carbon atoms, R¹, R², R³, R⁴, R⁵, R⁶, R⁷ and R⁸ may be the same or different and each represents a hydrogen atom, a halogen atom, or a monovalent hydrocarbon group having 1 to 5 carbon atoms, R⁹ and R¹⁰ may be the same or different and each represents a divalent hydrocarbon group having 1 to 5 carbon atoms, R¹¹ and R¹² may be the same or different and each represents a hydrogen atom or a monovalent hydrocarbon group having 1 to 20 carbon atoms, and m and n represent a repeating unit number of an oxyalkylene unit and also satisfy the following relation: 2 ≦ m + n ≦ 50.

Also disclosed herein are surface-treated inorganic particles obtained by the method comprising the step of kneading a system containing inorganic particles and a treating agent.

Furthermore, a surface-treated layered material obtained by the method comprising the step of kneading a system containing a layered material and a treating agent is disclosed herein.

A system containing inorganic particles and a treating agent is preferably kneaded by using a kneader.

As the kneader, a conventionally known kneader can be used and examples thereof include batch-wise and continuous kneaders.

Examples of the batch-wise kneader include open type roll, close type Bunbary kneader, kneader type kneader and mill type kneader.

Although any batch-wise kneader can be used, a roll is preferable because it suppresses heat generation and can be easily replaced in case of producing various kinds of products, a Bunbary kneader is preferable in view of efficient mixing and productivity, and a kneader type kneader is preferable in view of low cost of equipment. Among these batch-wise kneaders, a Bunbary kneader is particularly preferable.

When using the Bunbary kneader, a rotor is appropriately replaced by a rotor having different shape according to the purposes. In view of efficient mixing, a two-blade standard type rotor and a four-blade swirling flow type rotor are preferable.

When a filling ratio of the system containing inorganic particles and a treating agent to be kneaded is too small, it becomes difficult to apply a pressure, and therefore a kneading rate decreases. On the other hand, when the filling ratio is too large, the unkneaded portion remains. Therefore, the filling ratio preferably accounts for about 70 to 80% of the capacity of the kneader, though it varies depending on the viscosity of the material to be filled.

Examples of the continuous kneader include single-screw rotary kneader, twin-screw rotary kneader, single-screw kneader, twin-screw kneader and multi-screw kneader.

Among the rotary kneaders, a two-blade rotor is preferable to suppress heat generation, while a three-blade rotor is preferable when high pressure is required to efficiently treat inorganic particles. An engaging type rotor is preferable when an adhesive material is used or replacement is often conducted.

The screw kneader means a so-called kneading extruder. The kneading extruder is operated by varying the conditions such as configuration of screw, configuration of barrel, and screw revolution. A kneading disk is preferably used to increase treating efficiency by applying a high pressure to the material. A rotor segment is preferable to apply a pressure while suppressing heat generation.

When using a continuous kneader, the treating time depends on pitch between screw segments, screw revolution, or L/D of screw or barrel. When the treatment requires a long time, it is required to knead for a long time while applying a high pressure. In that case, preferably, the pitch between segments is decreased as small as possible and a three-threaded screw is used. The screw revolution is preferably 100 rpm or higher, more preferably 150 rpm or higher, and most preferably 200 rpm or higher. L/D is preferably 5 or greater, more preferably 7 or greater, and most preferably 10 or greater.

The order and position of the addition of the inorganic particles, treating agent and solvent vary depending on the purposes of adding the treating agent and solvent. For example, the following method is used, in addition to a method of simultaneously adding inorganic particles, a treating agent and an optionally used solvent.

In case inorganic particles are treated after scattering an aggregate of inorganic particles into primary particles, there can be employed a method of sufficiently dispersing inorganic particles and a solvent while kneading and adding a treating agent, followed by kneading.

In case self-reaction of the treating agent may occur, a method of adding the treating agent through several ports can be employed.

In case a hydrolyzable group of the treating agent has a relation with the treating reaction, like a silane compound, or the treating agent requires a reaction initiator, there can be employed a method of dispersing the inorganic particles and treating agent while kneading and adding a reaction initiator.

Examples of the inorganic particles used in the present invention include, but are not limited to, conventionally known inorganic particles made of layered materials such as montmorillonite, metal hydroxides such as magnesium hydroxide, metal oxides such as silica and alumina, carbonate compounds such as calcium carbonate and barium carbonate, sulfate compounds such as calcium sulfate and barium sulfate, carbon black, wood flour and the like. Among these inorganic particles, a layered material, especially swellable layered material, is preferable in view of the effect due to the treating agent.

Examples of the layered material include at least one kind selected from the group consisting of silicates, phosphates such as zirconium phosphate, titanates such as potassium titanate, tungstates such as sodium tungstate, uranates such as sodium uranate, vanadates such as potassium vanadate, molybdates such as magnesium molybdate, niobates such as potassium niobate, and graphite. Among these layered materials, a layered silicate is preferably used in view of availability and handling properties.

The swellable layered material means a layered material having the nature capable of swelling in water, a polar solvent soluble with water at an arbitrary ratio, or a mixed solvent of water and a polar solvent.

The layered silicate is formed of a tetrahedral crystalline sheet mainly made of silicon oxide and an octahedral crystalline sheet mainly made of metal hydroxide. Examples thereof include smectite clay and swellable mica.

The smectite clay is a natural or synthetic clay represented by the following general formula (3):

X¹_{0.2-0.6}Y¹₂₋₃Z¹₄O₁₀ (OH)₂·nH₂O (3)

wherein X¹ represents at least one kind selected from the group consisting of K, Na, 1/2Ca and 1/2Mg, Y¹ represents at least one kind selected from the group consisting or Mg, Fe, Mn, Ni, Zn, Li, Al and Cr, and Z¹ represents at least one kind selected from the group consisting of Si and Al, H₂O represents a water molecule which binds with an intercalated ion, and n markedly varies depending on the intercalated ion and the relative humidity.

Specific examples of the smectite clay include montmorillonite, beidellite, nontronite, saponite, iron saponite, hectorite, sauconite, stevensite, bentonite, substitution products or derivatives thereof, and mixtures thereof. The basal spacing of the smectite clay in an initial aggregate state is from about 10 to 17 Å and the average particle size of the smectite clay in an aggregate state is from about 1000 to 1000000 Å.

The swellable mica is a natural or synthetic mica represented by the following general formula (4):

X²_{0.5-1.0}Y²₂₋₃(Z²₄O₁₀) (F, OH)₂ (4)

wherein X² represents at least one kind selected from the group consisting of Li, Na, K, Rb, Ca, Ba and Sr, Y² represents at least one kind selected from the group consisting of Mg, Fe, Ni, Mn, Al and Li, Z² represents at least one kind selected from the group consisting of Si, Ge, Al, Fe and B.

The swellable mica has the nature capable of swelling in water, a polar solvent soluble with water at an arbitrary ratio, or a mixed solvent of water and a polar solvent. Examples of the swellable mica include lithium type teniolite, sodium type teniolite, lithium type tetrasilicon mica and sodium type tetrasilicon mica, substitution products and derivatives thereof, and mixtures thereof. The basal spacing of the smectite mica in an initial aggregate state is from about 10 to 17 Å and the average particle size of the smectite mica in an aggregate state is from about 1000 to 1000000 Å.

Some swellable micas have a structure similar to that of vermiculites and such vermiculite equivalents may also be used as the swellable mica.

The vermiculite equivalents have two types: a trioctahedron type and dioctahedron type, and are represented by the following general formula (5):

(Mg,Fe,Al)₂₋₃(Si_{4-X}Alₓ)O₁₀(OH)₂·(M⁺,M²⁺_{1/2})ₓnH₂O (5)

wherein M represents an exchangeable cation of an alkaline metal or alkaline earth metal such as Na and Mg, x represents 0.6 to 0.9, and n represents 3.5 to 5. The basal spacing of the vermiculites in an initial aggregate state is from about 10 to 17 Å and the average particle size of the vermiculites in an aggregate state is from about 1000 to 5000000 Å.

The crystal structure of the layered silicate is preferably a structure with a high purity wherein layers are stratified regularly in the c-axis direction. However, a so-called mixed layer mineral wherein the crystal cycle is disturbed to allow a plurality of types of crystal structures to be mixed may also be used.

These layered silicates may be used alone, or two or more kinds of them may be used in combination.

Among these layered materials, montmorillonite, bentonite, hectorite, and swellable mica having an intercalated sodium ion are preferable in view of the effect of improving dispersibility and heat resistance during molding of the resulting resin, and physical properties such as surface gloss.

The treating agent used in the present invention is a polyether compound represented by the following general formula (2): 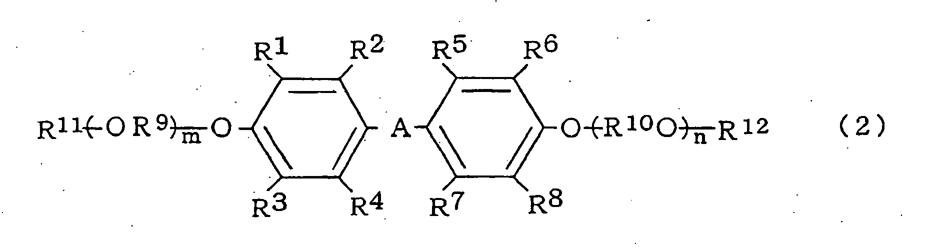 wherein -A- represents -O-, -S-, -SO-, -SO₂-, -CO-, an alkylene group having 1 to 20 carbon atoms, or an alkylidene group having 6 to 20 carbon atoms, R¹, R², R³, R⁴, R⁵, R⁶, R⁷ and R⁸ may be the same or different and each represents a hydrogen atom, a halogen atom, or a monovalent hydrocarbon group having 1 to 5 carbon atoms, R⁹ and R¹⁰ may be the same or different and each represents a divalent hydrocarbon group having 1 to 5 carbon atoms, R¹¹ and R¹² may be the same or different and each represents a hydrogen atom or a monovalent hydrocarbon group having 1 to 20 carbon atoms, and m and n represent a repeating unit number of an oxyalkylene unit and also satisfy the following relation: 2 ≦ m + n ≦ 50 and wherein the polyether compound satisfies at least one condition of these conditions: (a) said polyether compound has a cyclic hydrocarbon group, and (b) said polyether compound has a hydroxyl value of 30 mg KOH/g or less. Said polyether compound is used in view of thermal stability, dispersibility of the layered material, and availability. The substituent -A- is preferably -C(CH₃)₂-, -CH₂- or -CH(C₆H₅)- in view of availability. R¹, R², R³, R⁴, R⁵, R⁶, R⁷ and R⁸ are preferably groups selected from a hydrogen atom, a methyl group and an ethyl group in view of availability. R⁹ and R¹⁰ are preferably an ethylene group and/or a propylene group in view of availability. R¹¹ and R¹² are preferably groups selected from a hydrogen atom, a methyl group and an ethyl group in view of availability. (m + n) satisfies the following relation: 2 ≦ m + n ≦ 50. Preferably, (m + n) satisfies the following relation: 2 ≦ m+ n ≦ 30. When (m + n) is less than 2, the dispersibility of the layered material in the resin may deteriorate. On the other hand, when (m + n) exceeds 50, the thermal stability may deteriorate. m is preferably from 1 to 15 in view of availability, dispersibility of the layered material, and thermal stability. n is preferably from 1 to 15 in view of availability, dispersibility of the layered material, and thermal stability. In addition to the above polyether compound a known treating agent can be used. Examples of such further treating agents include silane compounds containing silane, polyether compounds having a polyether chain, titanate compounds containing titanium, organic onium salt compounds having an ammonium ion and a phosphonium ion, and water-soluble polymers such as polyvinyl alcohol and polyvinyl pyrrolidone.

The silane compound to be used may be any arbitrary silane compound represented by the following general formula (6):

YₙSiX₄₋ₙ (6)

wherein n represents an integer of 0 to 3, Y represents an optionally substituted hydrocarbon group having 1 to 25 carbon atoms, and X represents a hydrolyzable group and/or a hydroxyl group.

In case the hydrocarbon group having 1 to 25 carbon atoms in the general formula (6) has a substituent, examples of the substituent include a group which binds through an ester bond, a group which binds through an ether bond, an epoxy group, an amino group, a carboxyl group, a group having a carbonyl group at the end, an amide group, a mercapto group, a group which binds through a sulfonyl bond, a group which binds through a sulfinyl bond, a nitro group, a nitroso group, a nitrile group, a halogen atom, and a hydroxyl group. The hydrocarbon group may be substituted with at least one kind among these substituents, or may be substituted with two or more kinds thereof.

X is hydrolyzable group and/or a hydroxyl group, the hydrolyzable group being at least one type selected from the group consisting of an alkoxy group, alkenyloxy group, a ketoxime group, an acyloxy group, an amino group, an aminoxy group, an amido group, and a halogen atom.

In the general formula (6), in case n or (4 - n) is 2 or more, n Y(s) and (4 - n) X(s) may be the same or different.

In the general formula (6), examples of the compound wherein Y is a hydrocarbon group having 1 to 25 carbon atoms include a compound having a linear long-chain alkyl group such as decyltrimethoxysilane; a compound having a lower alkyl group such as methyltrimethoxysilane, a compound having an unsaturated hydrocarbon group such as 2-hexenyltrimethoxysilane, a compound having an alkyl group with a side chain such as 2-ethylhexyltrimethoxysilane, a compound having a phenyl group such as phenyltriethoxysilane, a compound having a naphthyl group such as 3-ã-naphthylpropyltrimethoxysilane, and a compound having an aralkyl group such as p-vinylbenzyltrimethoxysilane.

Examples of a compound wherein Y is especially a vinyl group among the hydrocarbon groups having 1 to 25 carbon atoms include vinyltrimethoxysilane, vinyltrichlorosilane and vinyltriacetoxysilane.

Examples of a compound wherein Y is a group having a group substituted with a group which binds through an ester bond include ã-methacryloxypropyltrimethoxy silane.

Examples of a compound wherein Y is a group having a group substituted with a group which binds through an ester bond include ã-polyoxyethylenepropyltrimethoxysilane and 2-ethoxyethyltrimethoxysilane.

Examples of a compound wherein Y is a group substituted with an epoxy group include ã-glycidoxypropyltrimethoxysilane.

Examples of a compound wherein Y is a group substituted with an amino group include ã-aminopropyltrimethoxysilane, ã-(2-aminoethyl)aminopropyltrimethoxysilane and ã-anilinopropyltrimethoxysilane.

Examples of a compound wherein Y is a group substituted with a group having a carbonyl group at the end include ã-ureidopropyltriethoxysilane.

Examples of a compound wherein Y is a group substituted with a mercapto group include ã-mercaptopropyltrimethoxysilane.

Examples of a compound wherein Y is a group substituted with a halogen atom include ã-chloropropyltriethoxysilane.

Examples of a compound wherein Y is a group substituted with a sulfonyl group include ã-phenylsulfonylpropyltrimethoxysilane.

Examples of a compound wherein Y is a group substituted with a sulfinyl group include ã-phenylsulfinylpropyltrimethoxysilane.

Examples of a compound wherein Y is a group substituted with a nitro group include ã-nitropropyltriethoxysilane.

Examples of a compound wherein Y is a group substituted with a nitroso group include ã-nitrosopropyltriethoxysilane.

Examples of a compound wherein Y is a group substituted with a nitryl group include ã-cyanoethyltriethoxysilane and ã-cyanopropyltriethoxysilane.

Examples of a compound wherein Y is a group substituted with a carboxyl group include ã-(4-carboxyphenyl)propyltrimethoxysilane.

In addition, a silane compound wherein Y is a group having a hydroxyl group can also be used. Examples thereof include N,N-di(2-hydroxyethyl)amino-3-propyltriethoxysilane. The hydroxyl group may be in the form of a silanol group (SiOH)

Substitution products or derivatives of the silane compound may also be used. These silane compounds may be used alone, or two or more kinds of them can be used in combination.

The additional polyether compound used as the treating agent means a compound wherein the main chain is polyoxyalkylene such as polyoxyethylene or polyoxyethylene-polyoxypropylene copolymer, the number of repeating units being from about 2 to 100.

The polyether compound may have arbitrary substituent in the side chain and/or the main chain as far as the thermoplastic resin and inorganic particles are not adversely affected.

Examples of the substituent include a hydrocarbon group, a group which binds through an ester bond, an epoxy group, an amino group, a carboxyl group, a group having a carbonyl group at the end, an amide group, a mercapto group, a group which binds through a sulfonyl bond, a group which binds through a sulfinyl bond, a nitro group, a nitroso group, a nitrile group, a Si atom-containing functional group capable of forming a Si-O- bond such as an alkoxysiliyl group or a silanol group, a halogen atom, and a hydroxyl group. The polyether compound may be substituted with at least one kind among these substituents, or may be substituted with two or more kinds thereof.

The hydrocarbon group as used herein includes a linear or branched (i.e., having a side chain), saturated or unsaturated, monovalent or multivalent aliphatic hydrocarbon group, an alicyclic hydrocarbon group and an aromatic hydrocarbon group. Examples of the hydrocarbon group include an alkyl group, an alkenyl group, an alkynyl group, a cycloalkyl group, a phenyl group and a naphthyl group. The "alkyl group" as used herein is intended to include a multivalent hydrocarbon group such as an "alkylene group" unless otherwise specified. Likewise, the alkenyl group, the alkynyl group, the cycloalkyl group, the phenyl group and the naphthyl group include an alkenylene group, an alkynylene group, a cycloalkylene group, a phenylene group and a naphthylene group.

A composition ratio of the substituent in the polyether compound is not specifically limited, but is preferably selected so that the polyether compound is soluble in water, or a polar solvent containing water. Specifically, the solubility in 100 g of water at room temperature is 1 g or more, preferably 2 g or more, more preferably 5 g or more, still more preferably 10 g of more, and particularly preferably 20 g or more.

Examples of the polar solvent include alcohols such as methanol, ethanol and isopropanol; glycols such as ethylene glycol, propylene glycol and 1,4-butanediol; ketones such as acetone and methyl ethyl ketone; ethers such as diethyl ether and tetrahydrofuran; amide compounds such as N,N-dimethylformamide and N,N-dimethylacetamide; and other solvents such as pyridine, dimethyl sulfoxide and N-methyl pyrrolidone. Also carbonic acid diesters such as dimethyl carbonate and diethyl carbonate can be used. These polar solvents may be alone, or two or more kinds of them may be used in combination.

Specific examples of the additional polyether compound used in the present invention include polyethylene glycol, polypropylene glycol, polytetramethylene glycol, polyethylene glycol-polypropylene glycol, polyethylene glycol-polytetramethylene glycol, polyethylene glycol monomethyl ether, polyethylene glycol dimethyl ether, polyethylene glycol monoethyl ether, polyethylene glycol diethyl ether, polyethylene glycol monoallyl ether, polyethylene glycol diallyl ether, polyethylene glycol monophenyl ether, polyethylene glycol diphenyl ether, polyethylene glycol octylphenyl ether, polyethylene glycol methylethyl ether, polyethylene glycol methylallyl ether, polyethylene glycol glyceryl ether, polyethylene glycol monomethacrylate, polyethylene glycol monoacrylate, polypropylene glycol monomethacrylate, polypropylene glycol monoacrylate, polyethylene glycol-polypropylene glycol monomethacrylate, polyethylene glycol-polypropylene glycol monoacrylate, polyethylene glycol-polytetramethylene glycol monomethacrylate, polyethylene glycol-polytetramethylene glycol monoacrylate, methoxypolyethylene glycol monomethacrylate, methoxypolyethylene glycol monoacrylate, octoxypolyethylene glycol-polypropylene glycol monomethacrylate, octoxypolyethylene glycol-polypropylene glycol monoacrylate, lauroxypolyethylene glycol monomethacrylate, lauroxypolyethylene glycol monoacrylate, stearoxypolyethylene glycol monomethacrylate, stearoxypolyethylene glycol monoacrylate, allyloxypolyethylene glycol monomethacrylate, allyloxypolyethylene glycol monoacrylate, nonylphenoxypolyethylene glycol monomethacrylate, nonylphenoxypolyethylene glycol monoacrylate, polyethylene glycol dimethacrylate, polyethylene glycol diacrylate, polyethylene glycol-polytetramethylene glycol dimethacrylate, polyethylene glycol-polytetramethylene glycol diacrylate, bis(polyethylene glycol)butylamine, bis(polyethylene glycol)octylamine, polyethylene glycol bisphenol A ether, polyethylene glycol-polypropylene glycol bisphenol A ether, ethylene oxide-modified bisphenol A dimethacrylate, ethylene oxide-modified bisphenol A diacrylate, ethylene oxide-propylene oxide-modified bisphenol A dimethacrylate, polyethylene glycol diglycidyl ether, polyethylene glycol ureidopropyl ether, polyethylene glycol mercaptopropyl ether, polyethylene glycol phenylsulfonylpropyl ether, polyethylene glycol phenylsulfinylpropyl ether, polyethylene glycol nitropropyl ether, polyethylene glycol nitrosopropyl ether, polyethylene glycol cyanoethyl ether, and polyethylene glycol cyanoethyl ether. These polyether compounds may be alone, or two or more kinds of them may be used in combination.

The present invention is directed to a layered material treated with the polyether compound as defined in annexed claim 1. Additional polyether compounds used as a treating agent satisfy at least one condition of these conditions: (a) the polyether compound has a cyclic hydrocarbon group, and (b) the polyether compound has a hydroxyl value of 30 mg KOH/g or less, among the above polyether compounds. When the polyether compound satisfies either condition, it is made possible to disperse the layered material in the resin, uniformly and finely.

The polyether compound having a cyclic hydrocarbon group is intended to mean a compound having a cyclic hydrocarbon group in the side chain and/or the main chain of a polyoxyalkylene compound such as polyoxyethylene or polyoxyethylene-polyoxypropylene copolymer. Specific examples thereof include polyethylene glycol having a bisphenol A unit in the main chain and polypropylene glycol having a bisphenol A unit in the main chain. When the polyether compound has a cyclic hydrocarbon group, the effect of finely dispersing in a thermoplastic resin such as polyester resin may be improved. Also the thermal stability is less likely to be impaired. The cyclic hydrocarbon group means an aromatic hydrocarbon group and/or an alicyclic hydrocarbon group and examples thereof include a phenyl group, a naphthyl group and a cycloalkyl group. The "phenyl group" as used herein is intended to include a polyvalent cyclic hydrocarbon group such as a "phenylene group" unless otherwise specified. Likewise, the naphthyl group and the cycloalkyl group include a naphthylene group and a cycloalkylene group. Among the cyclic hydrocarbon groups, an aromatic hydrocarbon group is preferable in view of stability and dispersibility of the layered material.

A polyether compound having a hydroxyl value of 30 mg KOH/g or less includes, for example, polyethylene glycol whose end is blocked with an alkoxy group. The hydroxyl value of the polyether compound is preferably 28 mg KOH/g or less, more preferably 25 mg KOH/g or less, still more preferably 23 mg KOH/g or less, and particularly preferably 20 mg KOH/g or less. When the hydroxyl value is more than 30 mg KOH/g, the molecular weight of the thermoplastic polyester resin decreases, thus lowering the strength and the toughness of the resin composition.

A method for measurement of the hydroxyl value is not specifically limited and an arbitrary method can be used. For example, 1 g of a polyether compound used in the present invention is acetylated with acetyl chloride, acetic anhydride or glacial acetic acid. Then, the acetylated polyether compound is hydrolyzed, that is, saponified with an alkali compound such as sodium hydroxide and the amount (mg) of potassium hydroxide required to neutralize acetic acid produced by the hydrolysis is taken as a hydroxyl value.

Among these polyether compounds, a polyether compound having a unit represented by the following general formula (1): 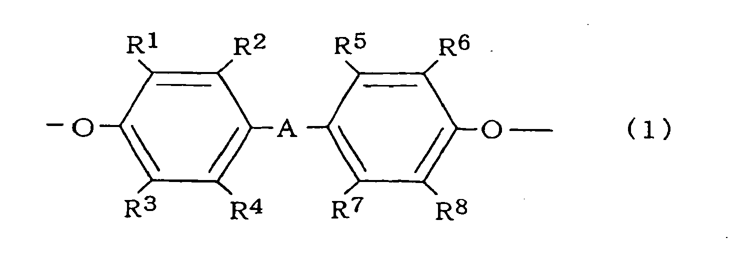 wherein -A- represents -O-, -S-, -SO-, -SO₂-, -CO-, an alkylene group having 1 to 20 carbon atoms, or an alkylidene group having 6 to 20 carbon atoms, R¹, R² R³, R⁴, R⁵, R⁶, R⁷ and R⁸ may be the same or different and each represents a hydrogen atom, a halogen atom, or a monovalent hydrocarbon group having 1 to 5 carbon atoms, in the main chain, is preferably used in view of thermal stability and dispersibility of the layered material. The substituent -A-is preferably -C(CH₃)₂- or -CH₂- in view of availability. R¹, R², R³, R⁴, R⁵, R⁶, R⁷ and R⁸ are preferably groups selected from a hydrogen atom, a methyl group and an ethyl group in view of availability.

Examples of the titanate compound include monoalkoxy type titanate treating agents represented by the general formula (7), such as isopropyltrisisostearoyl titanate, isopropyltris-n-dodecylbenzenesulfonyl titanate and isopropyldimethacrylisostearoyl titanate; chelete type titanate treating agents represented by the general formula (8), such as bis(dioctylpyrophosphate)-oxyacetate titanate, bis(dioctylpyrophosphate)-ethylene titanate and dicumylphenyloxyacetate titanate; coordinated type titanate treating agents represented by the general formula (9), such as tetraisopropyl-bis(dioctylphosphite) titanate and tetraoctyl-bis(ditridecyl phosphite) titanate; and substitution products or derivatives thereof. These titanate compounds may be used alone, or two or more kinds of them may be used in combination.

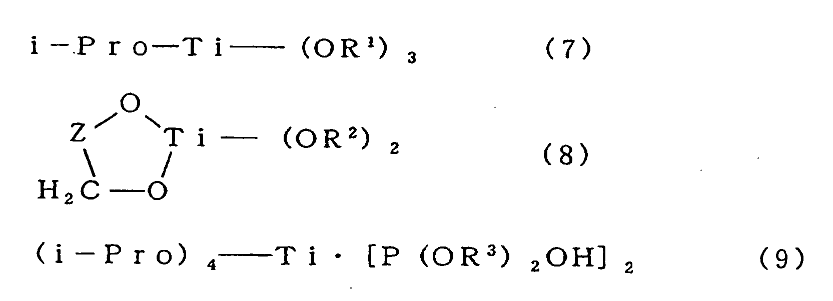

The organic onium salt compound is a conventionally known onium salt containing anions such as onium ion and halogen ion. Typical examples of the onium ion include an ammonium ion, a phosphonium ion, a sulfonium ion, and an onium ion originating from a heteroaromatic ring. Among these, the ammonium ion, the phosphonium ion, and the onium ion originating from a heteroaromatic ring are preferably used in view of availability and stability.

Examples of the ammonium ion include ions of alkyl ammoniums such as dodecyl ammonium, hexadecyl ammonium, octadecyl ammonium, methyldodecyl ammonium, butyldodecyl ammonium, methyloctadecyl ammonium, dimethyloctylammonium, dimethyldodecyl ammonium, dimethylhexadecyl ammonium, dimethyloctadecyl ammonium, trimethyldodecyl ammonium, triethyltetradecyl ammonium, tributylhexadecyl ammonium, dimethyldidodecyl ammonium, diethylditetradecyl ammonium, dibutyldihexadecyl ammonium and tridecyl methylammonium; ammoniums having a phenyl group, such as dimethylphenyl ammonium, diphenyldodecyl ammonium, diphenyloctadecyl ammonium, methylbenzyldidodecyl ammonium and dibenzyldihexadecyl ammonium; ammoniums having a hydrophilic group, such as [PEG] ammonium (hereinafter [PEG] represents a polyethylene glycol chain), methyl [PEG] ammonium, dodecyl [PEG] ammonium, hexadecyl [PEG] ammonium, dimethyl [PEG] ammonium, methyldodecyl [PEG] ammonium, methyloctadecyl [PEG] ammonium, methylbis [PEG] ammonium, dodecyl bis [PEG] ammonium and hexadecyl bis [PEG] ammonium; ammoniums of á-amino acid, such as glycine, alanine, valine, leucine, isoleucine, phenyl alanine, tyrosine, threonine, serine, bronine, triptophan, methionine, cystine, cysteine, asparagine, aspartic acid, glutamine, glutaminic acid, lysine, arginine and histidine; and ammoniums of ω-amino acid, such as 6-aminocaproic acid, 8-aminooctanoic acid, .10-aminodecanoic acid, 11-aminoundecanoic acid and 12-aminododecanoic acid.

Examples of the phosphonium ion include ions of alkyl phosphoniums such as tetrabutyl phosphonium, tetraoctyl phosphonium, trimethyldecyl phosphonium, trimethyldodecyl phosphonium, trimethylhexadecyl phosphonium, trimethyloctadecyl phosphonium, tributyldodecyl phosphonium, tributylhexadecyl phosphonium and tributyloctadecyl phosphonium, and [PEG] phosphonium, methyl [PEG] phosphonium, dodecyl [PEG] phosphonium, hexadecyl [PEG] phosphonium, dimethyl [PEG] phosphonium, methyldodecyl [PEG] phosphonium, methyloctadecyl [PEG] phosphonium, methylbis [PEG] phosphonium, dodecylbis [PEG] phosphonium and hexadecylbis [PEG] phosphonium.

Examples of the sulfonium ion include ions of tridodecyl sulfonium and didodecyltetradecyl sulfonium.

Examples of the onium ion originating from heteroaromatic ring include ions of pyridinium, methyl pyridinium, dimethyl pyridinium, 2-phenylpyridinium, 2-aminopyridinium, nicotinium, onium of nicotineamide, quinolinium and isoquinolinium.

Substitution products or derivatives of the onium salt can also be used. These onium salts can be used alone, or two or more kinds of them can be used in combination.

Examples of the water-soluble polymer include, but are not limited to, polyvinyl alcohol, polyethylene glycol, sodium polyacrylate, polyvinyl pyrrolidone, polyacrylic acid ester, polyacrylamide, oligosaccharide such as disaccharide or trisaccharide, cellulose processed natural polymer and starch processed natural polymer. These water-soluble polymers may be substituted as far as water solubility is not impaired. In addition to the above compounds, starch, mannan, seaweed, vegetable mucilage, mucilage originating from microorganism, natural polymeric compound such as protein, and polymeric compound such as polyvinylimine or ethylene-vinyl alcohol copolymer can also be used.

The surface-treated layered material of the present invention can be produced in the following manner.

When using a solvent, inorganic particles and a solvent are mixed while agitating, first. The agitation method is not specifically limited. For example, agitation is conducted using a conventionally known wet agitator. Examples of the wet agitator include a high-speed agitator capable of agitation by high-speed revolution of an agitating blade, wet mills for wet-pulverizing samples in the clearance between a rotor applied with a high shear force and a stator, mechanical wet pulverizers employing a hard medium, wet collision pulverizers for colliding samples at high speed using jet nozzles, and a wet ultrasonic pulverizer using an ultrasonic wave. Among these wet agitators, the wet mill is preferable. In case of efficiently mixing, the revolution during agitation is controlled to 1000 rpm or higher, preferably 1500 rpm or higher, and more preferably 2000 rpm or higher. The upper limit of the revolution is 25000 rpm. Even if the revolution is higher than 25000 rpm, the effect of agitation may not enhance. It is also possible to efficiently mix by controlling the shear rate to 500 (1/s) or higher, preferably 1000 (1/s) or higher, and more preferably 1500 (1/s) or higher. The upper limit of the shear rate is about 500000 (1/s). Even if the shear rate is higher than 500000 (1/s), the effect of agitation may not increase. The time required to mixing is from 1 to 10 minutes. The treating agent is added and sufficiently mixed while agitating for additional 5 to 60 minutes. The mixture is dried while heating, or freeze-dried, and then optionally powdered. Alternatively, a spray-drying method is preferably used.

The solvent used in the method is not specifically limited but means, for example, water, a polar solvent soluble with water at an arbitrary ratio, or a mixed solvent of water and a polar solvent. Among these solvents, water is preferable because it is easy to treat in the step of drying a dispersion medium.

Examples of the polar solvent include alcohols such as methanol, ethanol and isopropanol; glycols such as ethylene glycol, propylene glycol and 1,4-butanediol; ketones such as acetone and methyl ethyl ketone; ethers such as diethyl ether and tetrahydrofuran; amide compounds such as N,N-dimethylformamide and N,N-dimethylacetamide; and other solvents such as pyridine, dimethyl sulfoxide, methylcellosolve, 2-pyrrolidone and N-methyl pyrrolidone. Also carbonic acid diesters such as dimethyl carbonate and diethyl carbonate can be used. These polar solvents may be alone, or two or more kinds of them may be used in combination.

The amount of the treating agent can be adjusted so that affinity between inorganic particles and the resin to be used, and dispersibility of the inorganic particles in the resin molded product are sufficiently enhanced. If necessary, plural kinds of treating agents each having a different functional group can be used in combination. Therefore, the amount of the treating agent is not limited to a specific numerical value. The lower limit of the amount of the treating agent is preferably 0.1 parts by weight, more preferably 0.2 parts by weight, still more preferably 0.3 parts by weight, particularly preferably 0.4 parts by weight, and most preferably 0.5 parts by weight, based on 100 parts by weight of the inorganic particles. The upper limit of the amount of the treating agent is preferably 200 parts by weight, more preferably 180 parts by weight, still more preferably 160 parts by weight, particularly preferably 140 parts by weight, and most preferably 120 parts by weight, based on 100 parts by weight of the inorganic particles. When the lower limit of the amount of the treating agent is smaller than 0.1 parts by weight, the effect of finely dispersing the inorganic particles may decrease. Even if the amount of the treating agent is larger than 200 parts by weight, the effect of finely dispersing the inorganic particles may not increase.

The completion of the surface treatment of the inorganic particles by the above treating method can be confirmed by a conventionally known analytical method. For example, the following method can be employed in case a silane compound represented by the above general formula (6) is introduced into the surface of the inorganic particles.

First, the surface-treated inorganic particles are washed with an organic solvent such as tetrahydrofuran or chloroform to remove the silane compound which simply adsorbs to the surface-treated inorganic particles. After washing, the surface-treated inorganic particles are powdered with a mortar and the like and dried. The resulting surface-treated inorganic particles are sufficiently mixed with a window material such as powdered potassium bromide (KBr) at a predetermined ratio and the mixture is compressed into tablets. Then, an absorption band assigned to the silane compound is measured by a transmission method using Fourier transform infrared spectrum (FT-IR). If an accurate measurement is desired or the amount of silane compound is small, sufficiently dried powdered surface-treated inorganic particles are desirably measured by a diffuse reflectance infrared spectroscopy (DRIFT) as they are.

In case the inorganic particles are made of a swellable layered material and are treated with a silane compound, an organic onium salt compound, a polyether compound, a water-soluble polymer or the like, the basal spacing of the swellable layered material before and after the surface treatment is measured. After sufficiently drying the surface-treated inorganic particles of the present invention the basal spacing can be confirmed by a small angle X-ray diffraction (SAXS) method. According to this method, the peak angle value of the x-ray diffraction assigned to the (001) plane of the surface-treated swellable layered inorganic compound is measured by SAXS, and the Bragg equation is calculated using the resultant peak angle value, to obtain the basal spacing. The initial basal spacing of the swellable layered material before the treatment is also measured in the same manner. These basal spacings are compared with each other to confirm the expansion of the basal spacing.

The surface-treated layered material of the present invention can be used as a reinforcer capable of enhancing the rigidity and heat resistance of polymeric material having a polar group, such as thermoplastic polyester resin, polycarbonate resin, polyamide resin, polyallylate resin, polyacetal resin, polyphenylene sulfide resin, acrylonitrile-styrene copolymer and polysulfone resin. Hereinafter the resin mixed with the reinforcer is referred to as a resin composition.

The thermoplastic polyester resin means a conventionally known arbitrary thermoplastic polyester resin obtained by reacting an acid component composed mainly of a dicarboxylic acid compound and/or an ester-forming derivative of dicarboxylic acid with a diol component composed mainly of a diol compound and/or an ester-forming derivative of a diol compound. Specific examples of the thermoplastic polyester resin include polyethylene terephthalate, polypropylene terephthalate, polybutylene terephthalate, polyhexamethylene terephthalate, polycyclohexane-1,4-dimethyl terephthalate, neopentyl terephthalate, polyethylene isophthalate, polyethylene naphthalate, polybutylene naphthalate, polyhexamethylene naphthalate, or copolymerized polyesters thereof. These thermoplastic polyester resins may be used alone, or two or more kinds of them may be used in combination. Regarding the molecular weight of the thermoplastic polyester resin, logarithmic viscosity measured at 25°C using a mixed solvent of phenol and tetrachloroethane (weight ratio: 5/5) is from 0.3 to 2.0 (dl/g). When the logarithmic viscosity is smaller than 0.3 (dl/g), the strength of the resulting resin molded product may decrease. On the other hand, when the logarithmic viscosity is larger than 2.0 (dl/g), flow moldability upon molding may be impaired.

A polyamide resin means a polymer which has an amide bond (-NHCO-) in the main chain and can be melted while heating. Specific examples thereof include polytetramethylene adipamide (nylon 46), polycaprolactam (nylon 6), polyhexamethylene adipamide (nylon 66), polytetramethylene sebacamide (nylon 610), polyhexamethylene dodecamide (nylon 612), polyundecanolactam (nylon 11), polydodecanolactam (nylon 12), polyundecamethylene adipamide (116); polyamides obtained from terephthalic acid and/or isophthalic acid, adipic acid and hexamethylenediamine, such as polytrimethylhexamethylene terephthalamide (TMHT), polyhexamethylene terephthlamide (nylon 6T) and polyhexamethylene isophthalamide (nylon 61); polybis(4-aminocyclohexyl)methane dedecamide (nylon dimethyl PACM12), polymethaxysilylene adipamide (nylon MXD6), polyundecamethylene terephthalamide (nylon 11T), polyundecamethylene hexahydroterephthalamide (nylon 11TH), copolymerized polyamide containing 1,3-phenylenedioxydiacetic acid as a copolymer component, and copolymerized polyamide containing a dimerized fatty acid as a copolymer component. The polyamide resin may be a linear polyamide resin or (semi)aromatic polyamide resins. These polyamide resins may be used alone, or two or more kinds of them may be used in combination. The molecular weight of the polyamide resin is not specifically limited, but the relative viscosity measured at 25°C in 98% concentrated sulfuric acid is preferably within a range from 0.5 to 5.0. When the logarithmic viscosity is smaller than 0.5, mechanical properties and impact resistance of the resulting resin molded product may deteriorate. On the other hand, when the logarithmic viscosity is larger than 5.0, the flow processability upon molding may deteriorate.

A polyacetal resin is a polymer composed mainly of a repeating unit having an oxyalkylene structure represented by the general formula: -(O-CHR)ₙ- wherein R represents a hydrogen atom or a hydrocarbon group having 1 to 5 carbon atoms, and n represents a natural number. Specific examples thereof include a polyoxymethylene homopolymer, and a copolymer having a monomer unit of ethylene oxide, 1, 3-dioxolane or 1, 4-butanediol, in addition to an oxymethylene group as a main repeating unit. The method of producing a polyacetal resin is not specifically limited and the polyacetal resin is usually produced by ring-opening polymerization of trioxane. Also a copolymer can be used and those obtained by crosslinking or graft modification by a known method can be used. These polyacetal resins may be used alone, or two or more kinds of them may be used in combination. The molecular weight is not specifically limited and a melt index (MI) measured at 190°C in compliance with ASTM D1238-89E is usually within a range from 1 to 25. When MI is smaller than 1, the processability may be impaired. On the other hand, when MI is larger than 25, physical properties may become poor.

A polyarylene sulfide resin is a polymer wherein an aromatic residue binds through a thioether bond, and can be melted while heating. The main chain structure of the resin includes, for example, polyphenylene sulfide and polyphenylene sulfide sulfone, and these polyarylene sulfide resins may be used alone, or two or more kinds of them may be used in combination. The molecular weight of the polyarylene sulfide resin is not specifically limited and a weight average molecular weight is usually within a range from 10000 to 500000. When the weight average molecular weight is smaller than 10000, physical properties may become poor. On the other hand, when the weight average molecular weight is larger than 500000, the processability may be impaired.

A polycarbonate resin is not specifically limited, and a conventionally known arbitrary polycarbonate resin obtained by the reaction of a bisphenol compound and phosgene, or the reaction of a bisphenol compound and a carbonic acid diester is used. Specific examples thereof include 2,2-bis(4-hydroxyphenyl)propane type polycarbonate resin, 2,2-bis(3,5-dimethyl-4-hydroxyphenyl)propane type polycarbonate, 1,1-bis(4-hydroxyphenyl)cyclohexane type polycarbonate, 4,4'-dihydroxyphenyl ether type polycarbonate, 4,4'-dihydroxydiphenylsulfide type polycarbonate, 4,4'-dihydroxydiphenylsulfone type polycarbonate, bis(4-hydroxyphenyl)ketone type polycarbonate and 1,4-bis(4-hydroxyphenylsulfonyl)benzene. These poltarylene sulfide resins may be used alone, or two or more kinds of them may be used in combination. The polycarbonate resins may be used alone, or two or more kinds of polycarbonate resins having different components, ratios and/or molecular weights may be used in combination. In view of the strength, mechanical properties and cost, a bisphenol A type polycarbonate is preferable. The molecular weight of the polycarbonate (PC) resin is not specifically limited and a viscosity average molecular weight (Mv) is within a range from 10000 to 200000. When the viscosity average molecular weight is smaller than 10000, physical properties may become poor. On the other hand, when the viscosity average molecular weight is larger than 200000, the processability may be impaired.

A polyallylate resin is not specifically limited and is a known polyallylate resin obtained by reacting acid component (hereinafter referred to as an aromatic dicarboxylic acid) composed mainly of an aromatic dicarboxylic acid compound and/or an ester-forming derivative of an aromatic dicarboxylic acid with a diphenol component (hereinafter referred to as diphenol) composed mainly of a diphenol compound and/or an ester-forming derivative of a diphenol compound. Specific examples of the polyallylate resin include polyallylate (for example, manufactured by UNITIKA LTD. under the trade name of U polymer) obtained by the reaction of terephthalic acid and 2,2-bis(4-hydroxyphenyl)propane("bisphenol A"); polyallylate (for example, manufactured by Du Pont Co. under the trade name of Aliron) obtained by the reaction of isophthalic acid and 2,2-bis(4-hydroxyphenyl)propane; polyallylate obtained by the reaction of a mixture of terephthalic acid and isophthalic acid, and 2,2-bis(4-hydroxyphenyl)propane; polyallylate obtained by the reaction of a mixture of terephthalic acid and isophthalic acid and a mixture of 2,2-bis(4-hydroxyphenyl)propane and 1,1-bis(4{hydroxyphenyl)-3,3,5-trimethylcyclohexane; polyallylate obtained by the reaction of a mixture of isophthalic acid and 2,5-naphthalenedicarboxylic acid, 2,2-bis(4-hydroxyphenyl)propane; polyallylate obtained by the reaction of a mixture of isophthalic acid and 2,5-naphthalenedicarboxylic acid and a mixture of 2,2-bis(4-hydroxyphenyl)propane and 1,1-bis(4-hydroxyphenyl)-3,3,5-tri-methylcyclohexane; and a polyallylate resin produced by using two or more kinds of aromatic dicarboxylic acids and/or diphenols used in the production of these resins. These polyallylate resins can be used alone, or two or more kinds of the polyallylate resins having different compositions or components can be used in combination. The molecular weight of the polyallylate resin is not specifically limited and a weight average molecular weight (Mw) measured at 25° C in chloroform is usually within a range from 25000 to 80000. When Mw is smaller than 25000, physical properties may become poor. On the other hand, when Mw is larger than 80000, the processability may be impaired.

The surface-treated inorganic particles of the present invention can be finely dispersed in the resin, thereby making it possible to exert various effects. Moreover, anisotropy is suppressed as compared with a fiber reinforcer which has commonly been used, heretofore. In the fiber-reinforced material, fibers are fractured during recycling and physical properties deteriorate, while the surface-treated inorganic particles of the present invention are excellent in recycling properties because the particles are not fractured and physical properties do not deteriorate. Examples of the other effect include an effect of enhancing stability by suppressing warp, shrinkage during molding and linear expansion coefficient, an effect of imparting barrier properties, and an effect of improving moldability by increasing a crystallization rate of a crystalline resin.

The method of finely dispersing the surface-treated inorganic particles of the present invention is not specifically limited. For example, there can be used a method of melt-kneading a resin and a surface-treated layered material using various common kneaders. Examples of the kneader include single-screw extruder, twin-screw extruder, roll, Banbury mixer and kneader. Among these kneaders, a kneader having high shear efficiency is preferable. The resin and the surface-treated inorganic particles of the present invention may be simultaneously charged in the above kneader and melt-kneaded. Alternatively, the surface-treated inorganic particles of the present invention may be added to the resin, which was previously melted, followed by melt-kneading.

The surface-treated inorganic particles obtained by the present invention can be utilized in various fields as reinforcers, dimensional stability-imparting agents and heat resistance-imparting agents for various resins for injection molding, reinforcers and gas barrier properties-imparting agents for film and bottle products, and viscosity adjustors for organic solvents and paints, because they are subjected to a surface treatment very efficiently and uniformly.

The surface-treated inorganic particles of the present invention can be preferably used for automobile parts, parts for appliances, daily necessities, packaging material, and other industrial materials, because various features can be imparted by mixing with resins.

The present invention will be described in detail by way of examples, but the present invention is not limited by the examples.

Principal raw materials used in the following Examples and Comparative Examples are summarized below. Unless otherwise specified, these raw materials are not purified.

### (Raw materials)

### Inorganic particles

A-1: Montmorillonite (manufactured by Kunimine Industries Co., Ltd. under the trade name of Kunipia F, basal spacing = 13 Å)
A-2: Swellable mica (manufactured by CO-OP Chemical Co., Ltd. under the trade name of SOMASIF ME100, basal spacing = 12 Å)
A-3: Natural talc (manufactured by NIPPON TALC CO., LTD. under the trade name of MICRO ACE K-1)

### Fibrous reinforcers

A-4: Glass fiber (manufactured by Nippon Electric Glass Co. , Ltd. under the trade name of T-195H)

### Treating agents

B-1: Polyether compound (polyethylene glycol having a bisphenol A unit in the main chain, manufactured by TOHO Chemical Industry Co., LTD. under the trade name of Bisol 18EN, hydroxyl value = 110 mg KOH/g, m = 9, n = 9 in the general formula (2))
B-2: Polyether compound (manufactured by NOF CORPORATION under the trade name of Uniox MM500, hydroxyl value = 2.8 mg KOH/g, having a methoxy group)
B-3: Silane compound (manufactured by Nippon Unicar Co., Ltd. under the trade name of A1120)
B-4: Organic onium salt compound (manufactured by Lion Corporation under the trade name of Esocard C25)
B-5: Polyvinyl pyrrolidone (manufactured by Wako Pure Chemical Industries, Ltd.)

### Resins

C-1: Polyethylene terephthalate resin (manufactured by Kanebo Ltd. under the trade name of Bellpet EFG70, logarithmic viscosity measured at 25°C using a mixed solvent of phenol and tetrachloroethane (weight ratio: 5/5): 0.73 (dl/g))
C-2: Polybutylene terephthalate resin (manufactured by KOLON Co. under the trade name of KP210, logarithmic viscosity measured at 25° C using a mixed solvent of phenol and tetrachloroethane (weight ratio: 5/5): 0.82 (dl/g))
C-3: Polyamide 6 (manufactured by Toray Industries Inc. under the trade name of Amilane CM1026, relative viscosity measured at 25° C in 98% concentrated sulfuric acid: 3.0)
C-4: Polyacetal (manufactured by Polyplastics Co. under the trade name of Duracone M90-44, melt index measured under the conditions of a temperature of 190°C and a load of 2.16 kg: 9.0 g/10 min)

The evaluation methods in the Examples and Comparative Examples are summarized below.

### (Basal spacing)

A basal spacing of a surface-treated layered material was measured by an X-ray generator (manufactured by Rigaku Denki Co. , Ltd. under the trade name of RU-200B) using a target Cuká ray and an Ni filter under the conditions of a voltage of 40 kV, a current of 200 mA, a scanning angle 2è of 0.2 to 16.0° , and a step angle of 0.02°

The basal spacing was calculated by calculating the Bragg equation using the actual peak angle value of the small angle X-ray diffraction. When the confirmation of the peak angle value of the small angle X-ray diffraction is difficult, it was considered that the layers had been sufficiently exfoliated to substantially lose the crystallinity as described above, or that the confirmation was difficult since the peak angle value was about 0.8° or less, giving the evaluation result of the basal spacing of greater than 100 Å.

### (FT-IR)

About 1 mg of a surface-treated compound and about 200 mg of KBr powder were sufficiently mixed using a mortar. A KBr disk for measurement was produced from the resultant mixture using a desk press. The measurement was then performed by a transmission method using an infrared spectroscope (manufactured by Shimadzu Corporation under the trade name of 8100M). An MCT detector cooled by liquid nitrogen was used as a detector with a resolving power of 4 cm⁻¹ and scans of 100 times.

### (Ash content)

The ash content was measured in compliance with JIS K7052.

### (Measurement of dispersion state)

An ultra-thin section having a thickness of 50 to 100 µm of a resin composition was used. Using a transmission electron microscope (manufactured by JEOL, Ltd. under the trade name of JEM-1200EX), a dispersion state of a reinforcer such as layered material was observed at a magnification of × 40 , 000 to × 1, 000 , 000 at an acceleration voltage of 80 kV and a microphotograph was taken. In the resulting TEM photograph, an arbitrary region wherein 100 or more dispersion particles are present was selected and the number of dispersed particles (value [N]) was measured. The larger the value [N], the particles are dispersed more finely. The value [N] was measured in the following manner. First, the number of particles of the layered material present in the selected region is determined on the TEM image. Separately, the ash content of the resin composition originating from the layered material is measured by the above method. The number of particles was divided by the ash content and then calculated in terms of an area of 100 µm², and the resulting value was taken as the value [N]. In case the dispersed particles are not suited for observation using TEM because of too large size, the value [N] was determined in the same manner as described above using an optical microscope (manufactured by OLYMPUS CORPORATION under the trade name of BH-2). If necessary, samples were melted at 250 to 270° C using a hot stage THM600 manufactured by LINKAM Co. and then the state of the dispersed particles was measured in a molten state.

### (Warp)

A resin composition was dried and then injection-molded into plate specimens each measuring about 120 mm × 120 mm × 1 mm in thickness under the conditions of a mold temperature of 120° C and a resin temperature of 250 to 280°C. Each of the plate specimens was placed on the plane and, after pressing down one corner among four corners of the specimen, a largest value of the distance from the plane (warp) among the residual three corners was measured using a caliper. In the same manner, the measurement was conducted with regard for other corners and the resulting values of warp were averaged.

### (Flexural characteristics)

A resin composition was dried and then injection-molded into specimens each measuring about 120 mm × 120 mm × 3 mm in thickness at a resin temperature of 250 to 270° C using an injection molding machine under a clamp pressure of 80 t. Specimens each measuring about 12.7 mm × 120 mm × 3 mm in thickness were cut from the resulting molded product in the direction corresponding to the resin flow (MD direction) and the direction vertical to the direction corresponding to the resin flow (TD direction) and the flexural elastic modulus was measured in compliance with ASTM D-790. The larger the value, the better the flexural elastic modulus. The smaller a difference in the value between MD and TD directions, more less anisotropy exists.

### (Crystallization temperature and Crystallinity)

Crystallization temperature and crystallinity were measured at a heating rate of 10° C/min using DSC220C manufactured by Seiko Instruments Inc.

### Example 1

As a kneader, a KRC kneader manufactured by KURIMOTO, LTD. was used. 100 Parts by weight (hereinafter described as "parts") of inorganic particles A-2 and 100 parts of deionized water were simultaneously charged in the KRC kneader and then kneaded at a revolution of 200 rpm. 30 Parts of a treating agent B-1 was charged through a charging port, followed by kneading. The time of inorganic particles retained in the KRC kneader, that is, the time of a kneading treatment was about 40 seconds. The kneaded mixture was dried in an oven and then pulverized using a hammer mill to obtain treated inorganic particles as powders. The surface state and basal spacing of the resulting inorganic particles were determined. The results are shown in Table 1.

### Comparative Example 1

Using a wet agitator, a trial of mixing deionized water and inorganic particles A-2 was made according to the same composition as in Example 1. However, the treatment could not be conducted because agitation was made impossible.

### Comparative Example 2

The same wet agitator as in Comparative Example 1 was used. 100 Parts of inorganic particles A-2 and 1000 parts of deionized water were agitated at a higher dilution ratio than that of Comparative Example 1. A treating agent B-1 was added, followed by agitation for additional 15 minutes. In the same manner as in Example 1, the kneaded mixture was dried, pulverized and then evaluated. According to the above method, the same functional group as in Example 1 was detected in the inorganic particles A-2 and the basal spacing was expanded similarly. Although the inorganic particles were subjected to a surface treatment, a large amount of water was used during agitation, and therefore the hydration and drying process required 40 hours, resulting in poor productivity.

### Comparative Example 3

As a device capable of agitation even in case of a small ratio of water, a ribbon blender was used. First, deionized water and inorganic particles A-1 were mixed according to the same composition as in Example 1. After mixing for 30 minutes, a treating agent B-1 was added, followed by agitation for additional 30 minutes. The total time required for treating was 60 minutes. The kneaded mixture was dried and then pulverized to form a product as powders. Although the drying time was short and the same as in Example 1, various results were obtained, for example, no functional group is detected, a change in basal spacing is not recognized after the treatment or, if any, the basal spacing is smaller than that of inorganic particles obtained in Example 1. According to the device such as ribbon blender which has no kneading action, the inorganic particles are not uniformly dispersed even when subjected to a treatment for a long time.

**Table 1**

| | Example | Comparative Examples | | |
|---|---|---|---|---|
| | 1 | 1 | 2 | 3 |
| Deionized water (Parts) | 100 | 100 | 1000 | 100 |
| Inorganic particles A-2 (Parts) | 100 | 100 | 100 | 100 |
| Treating agent B-1 (Parts) | 30 | 30 | 30 | 30 |
| Ash content (% by weight) | 76.9 | - | 76.8 | 42.5 - 98.1 |
| Treating time (second) | About 40 | impossible to agitate | 1500 | 3600 |
| Drying time (hour) | 3.5 | - | 40 | 3.5 |
| Basal spacing before treatment () | 12 | - | 12 | 12 |
| Basal spacing after treatment () | 32 | - | 32 | 12 - 36 |
| Functional group detected after treatment | Ether bond, Ethylene group, Benzene ring, Hydroxyl group | - | Ether bond, Ethylene group, Benzene ring, Hydroxyl group | Ether bond, Ethylene group, Benzene ring, Hydroxyl group * |

| | | | | |
|---|---|---|---|---|
| *: Functional group is not detected, sometimes. | | | | |

### Reference Examples 1 to 3

Using inorganic particles and treating agents at weight ratios shown in Table 2, inorganic particles were treated by a kneader in the same manner as in Example 1. The results are shown in Table 2.

**Table 2**

| | Reference Examples | | |
|---|---|---|---|
| | 1 | 2 | 3 |
| Deionized water (Parts) | 100 | 1000 | 100 |
| Inorganic particles A-1 (Parts) | 100 | 100 | |
| Inorganic particles A-2 (Parts) | | | 100 |
| Treating agent B-3 (Parts) | 50 | | |
| Treating agent B-4 (Parts) | | 50 | |
| Treating agent B-5 (Parts) | | | 30 |
| Ash content(% by weight) | 63.2 | 62.8 | 76.8 |
| Treating time (second) | About 40 | About 40 | About 40 |
| Drying time (hour) | 3.5 | 3.5 | 3.5 |
| Basal spacing before treatment () | 13 | 13 | 12 |
| Basal spacing after treatment () | 30 | 41 | 32 |
| Functional group detected after treatment | Amino group, Methylene group, Ether group | Methylene group, Ether group | Vinyl group, Methylene group |

### Example 2

To show the effect of the surface-treated inorganic particles obtained in the method of Example 1, the following test was conducted.

100 parts of a thermoplastic polyester resin C-1 and 13 parts of inorganic particles obtained in Example 1 were melt-kneaded by a twin-screw extruder (manufactured by The Japan Steel Works, LTD. under the trade name of TEX44) and then pelletized.

The resulting pellets were dried at 130° C for 4 hours and injection-molded into specimens each measuring about 10 mm × 100 mm × 6 mm using an injection molding machine (manufactured by TOSHIBA MACHINE CO., Ltd. under the trade name of IS-75E) under a clamp pressure of 75 t, and then the deflection temperature under load (ASTM D-648), the flexural strength and the flexural elastic modulus (ASTM D-790) were measured. Separately, the pellets were injection-molded into specimens each measuring about 120 mm × 120 mm × 2 mm, and then the shrinkage rate during molding was measured and the center line average roughness was measured by using a surface roughness meter (manufactured by TOKYO SEIMITSU CO. , LTD. under the trade name of Surfcom 1500A. The results are shown in Table 3.

### Comparative Example 4

In the same manner as in Example 5, except that inorganic particles obtained in Comparative Example 3 were used in place of inorganic particles obtained in Example 1, the evaluation was conducted. The results are shown in Table 3.

As is apparent from Table 3, the resin composition produced by kneading the inorganic particles obtained in the present invention with the thermoplastic resin is excellent in mechanical properties, heat resistance and shrinkage during molding without impairing surface appearance.

**Table 3**

| | | Example | Comparative Example |
|---|---|---|---|
| | | 2 | 4 |
| Polyester resin | Parts by weight | 100 | 100 |
| Inorganic particles obtained in Example 1 | Parts by weight | 13 | |
| Inorganic particles obtained in Comparative Example 3 | Parts by weight | | 13 |
| Ash content | % by weight | 8.5 | 8.5 |
| Flexural strength | MPa | 125 | 110 |
| Flexural elastic modulus | MPa | 5650 | 3910 |
| Deflection temperature under load | °C | 195 | 174 |
| Shrinkage rate | % | 0.9 | 1.5 |
| Center line average roughness | nm | 21 | 368 |

### Examples 3 to 5 and Reference Example 4

The surface-treated layered material of the present invention was produced by the method different from that of Example 1.

Deionized water and a layered material were mixed while agitating for 5 minutes using a wet mill (colloid mill, manufactured by Nippon Seiki Co., Ltd., revolution: 3000 to 5000 rpm, shear rate: 2000 to 3000 (1/s)) to form a slurry. A polyether compound was added and the slurry was treated with the polyether compound while mixing for 15 to 30 minutes. The mixture was dried and then formed into powders by pulverization to obtain surface-treated layered materials (M-1 to M-4) treated with the polyether compound of the present invention. A weight ratio of raw materials used is shown in Table 4. The basal spacing and the functional group present in the surface of the resulting surface-treated layered materials were evaluated. The results are summarized in Table 4.

**Table 4**

| Examples | | 3 | 4 | 5 | Reference Example 4 |
|---|---|---|---|---|---|
| Surface-treated layered material | | M-1 | M-2 | M-3 | M-4 |
| Deionized water | Parts by weight | 100 | 100 | 100 | 100 |
| Layered material A-1 | | 5 | | | |
| Layered material A-2 | | | 10 | 10 | 10 |
| Polyether compound B-1 | | 3 | 2 | 5 | |
| Polyether compound B-2 | | | | | 5 |
| Basal spacing | Å | 28 | 24 | 35 | 23 |
| Results of IR analysis | | Ether bond, Benzene ring, Hydroxyl group, Methyl group, Methylene group | Ether bond, Benzene ring, Hydroxyl group, Methyl group, Methylene group | Ether bond, Benzene ring, Hydroxyl group, Methyl group, Methylene group | Ether bond, Methyl group, Methylene group |

As is apparent from Table 4, the polyether compound is present on the surface of the layered material, thereby expanding the basal spacing, and thus a surface-treated layered material of the present invention is obtained.

### Example 6

To show the effect of the surface-treated layered material produced in Example 4, the following test was conducted. The resin and the surface-treated layered material of the present invention were simultaneously charged in a twin-screw extruder (manufactured by The Japan Steel Works, LTD. under the trade name of TEX44) at a weight ratio shown in Table 5 and then melt-kneaded to obtain a resin composition. The flexural elastic modulus in MD and TD directions and warp of the resulting resin composition were evaluated. The results are shown in Table 5.

### Comparative Examples 5 to 7

A resin C-1, and a mixture of the resin C-1 and inorganic particles A-3 or a fibrous reinforcer A-4 were respectively melt-kneaded by a twin-screw extruder (manufactured by The Japan Steel Works, LTD. under the trade name of TEX44) to obtain resin compositions and the resulting resin compositions were evaluated. The results are shown in Table 5.

**Table 5**

| | | Example 6 | Comparative Examples | | |
|---|---|---|---|---|---|
| | | | 5 | 6 | 7 |
| Resin C-1 | Parts by weight | 100 | 100 | 100 | 100 |
| Surface-treated layered material M-2 | | 12 | | | |
| Inorganic particles A-3 | | | | 10 | |
| Inorganic particles A-4 | | | | | 10 |
| Ash content | % by weight | 8.9 | 0 | 9.8 | 9.8 |
| Number of dispersed particles [N] | | 82 | 0 | 5 | 1 |
| Flexural elastic modulus MD | MPa | 5680 | 2980 | 3490 | 5840 |
| Flexural elastic modulus TD | | 5660 | 3010 | 3510 | 3650 |
| Warp | mm | 1.2 | deformed | 1.2 | 25 |

As is apparent from Table 5, the surface-treated layered material of the present invention is dispersed uniformly and finely in the resin and therefore has an isotropic reinforcing effect and an effect of suppressing warp. The system containing the inorganic particles A-3 is insufficient in the reinforcing effect. The system containing the inorganic particles A-4 exerts an anisotropic reinforcing effect and is therefore insufficient in dimensional stability because of significant warp.

### Example 7

To show the effect of the surface-treated layered material, the following test was conducted. The resin and the surface-treated layered material of the present invention were simultaneously charged in a twin-screw extruder (manufactured by The Japan Steel Works, LTD. under the trade name of TEX44) at a weight ratio shown in Table 6 and then melt-kneaded to obtain a resin composition. The crystallization temperature upon heating and cooling and the crystallinity of the resulting resin composition were evaluated. The results are shown in Table 6. Comparative Examples 8 to 9

A resin C-1 and inorganic particles A-3 were melt-kneaded by a twin-screw extruder to obtain resin compositions and the resulting resin compositions were evaluated in the same manner as in Example 7. The results are shown in Table 6.

**Table 6**

| | | Example 7 | Comparative Examples | |
|---|---|---|---|---|
| | | | 8 | 9 |
| Resin C-1 | Parts by weight | 100 | 100 | 100 |
| Surface treatment layered material M-2 | | 4 | | |
| Inorganic particles A-3 | | | | 4 |
| Ash content | % by weight | 3.3 | 0.0 | 3.8 |
| Number of dispersed particles [N] | | 86 | 0 | 4 |
| Crystallization temperature upon heating | 0C | 208 | 180 | 195 |
| Crystallization temperature upon cooling | | 103 | 145 | 134 |
| Crystallinity | % | 38.6 | 25.6 | 33.5 |

As is apparent from Table 6, the crystallization rate and the crystallinity of the resin are enhanced when the surface-treated layered material of the present invention is finely dispersed, and thus the moldability is improved. Examples 8 to 10 and Comparative Examples 10 to 12

To show the effect of the surface-treated layered material of the present invention, the following test was conducted. The resin and the surface-treated layered material of the present invention or inorganic particles A-3 were charged at a weight ratio shown in Table 7 and then melt-kneaded to obtain compositions. The flexural elastic modulus in MD and TD directions and warp of the resulting compositions were evaluated. The results are shown in Table 7.

**Table 7**

| | | Examples | | | Comparative Examples | | |
|---|---|---|---|---|---|---|---|
| | | 8 | 9 | 10 | 10 | 11 | 12 |
| Resin C-2 | Parts by weight | 100 | | | 100 | | |
| Resin C-3 | | | 100 | | | 100 | |
| Resin C-4 | | | | 100 | | | 100 |
| Surface treatment layered material M-2 | | 12 | | 12 | | | |
| Surface treatment layered material M-3 | | | 15 | | | | |
| Inorganic particles A-3 | | | | | 10 | 10 | 10 |
| Ash content | % by weight | 8.9 | 8.7 | 8.9 | 9.8 | 9.7 | 9.7 |
| Number of dispersed particles [N] | | 80 | 73 | 78 | 4 | 4 | 4 |
| Flexural elastic modulus MD | MPa | 5340 | 5120 | 4880 | 3040 | 2990 | 2840 |
| Flexural elastic modulus TD | | 5330 | 5090 | 4850 | 3050 | 3040 | 2860 |
| Warp | mm | 1.5 | 2.1 | 2.2 | 2.5 | 5.1 | 5.9 |

As is apparent from Table 7, the surface-treated layered materials are uniformly dispersed in other various resins, and thus an isotropic reinforcing reinforcing effect is obtained and also warp is suppressed.

As described above in detail, inorganic particles having uniform treated surface can be produced in a short time with high efficiency by treating a system containing inorganic particles and a treating agent using a kneader.

The surface-treated inorganic particles can be utilized in various fields as reinforcers, dimensional stability-imparting agents and heat resistance-imparting agents for various resins for injection molding, reinforcers and gas barrier properties-imparting agents for film and bottle products, and viscosity adjustors for organic solvents and paints without impairing surface appearance of a resin composition.

Furthermore, the inorganic particles are dispersed uniformly and finely when incorporated into polyester and polyamide resins. As a result, an isotropic reinforcing effect, an effect of suppressing warp, and another effect such as crystallization accelerating effect can be exerted. The resin composition thus obtained can be used for various purposes.

## Claims

1. Surface-treated inorganic particles comprising a polyether compound and inorganic particles whose surface is treated with said polyether compound, wherein said polyether compound satisfies at least one condition of these conditions: (a) said polyether compound has a cyclic hydrocarbon group, and (b) said polyether compound has a hydroxyl value of 30 mg KOH/g or less, wherein said polyether compound is represented by the following general formula (2): 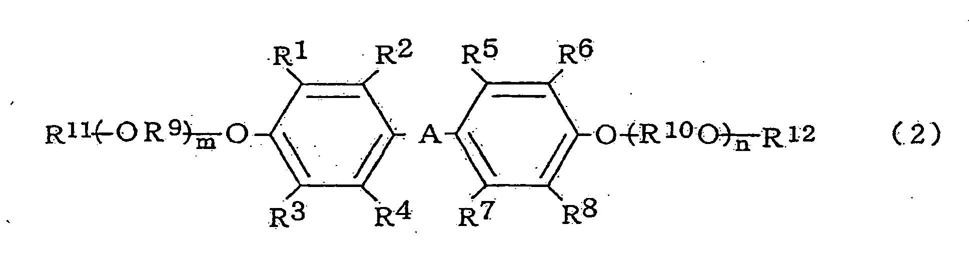 wherein -A- represents -O-, -S-, -SO-, -SO₂-, -CO-, an alkylene group having 1 to 20 carbon atoms, or an alkylidene group having 6 to 20 carbon atoms, R¹, R², R³, R⁴, R⁵, R⁶, R⁷ and R⁸ may be the same or different and each represents a hydrogen atom, a halogen atom, or a monovalent hydrocarbon group having 1 to 5 carbon atoms, R⁹ and R¹⁰ may be the same or different and each represents a divalent hydrocarbon group having 1 to 5 carbon atoms, R¹¹ and R¹² may be the same or different and each represents a hydrogen atom or a monovalent hydrocarbon group having 1 to 20 carbon atoms, and m and n represent a repeating unit number of an oxyalkylene unit and also satisfy the following relation: 2 ≤ m + n ≤ 50.

## Patentansprüche

1. Oberflächenbehandelte anorganische Teilchen, umfassend eine Polyetherverbindung und anorganische Teilchen, deren Oberfläche mit der Polyetherverbindung behandelt ist, wobei die Polyetherverbindung mindestens eine Bedingung dieser Bedingungen erfüllt: (a) die Polyetherverbindung hat einen cyclischen Kohlenwasserstoffrest und (b) die Polyetherverbindung hat einen Hydroxylwert von 30 mg KOH/g oder weniger, wobei die Polyetherverbindung durch die folgende allgemeine Formel (2) dargestellt ist: 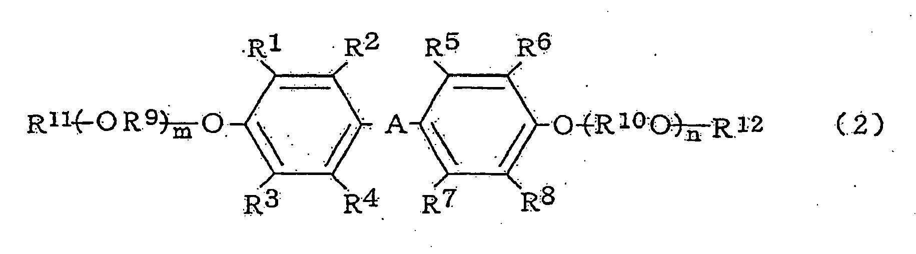 wobei -A- für -O-, -S-, -SO-, -SO₂-, -CO-, einen Alkylenrest mit 1 bis 20 Kohlenstoffatomen oder einen Alkylidenrest mit 6 bis 20 Kohlenstoffatomen steht, R¹, R¹, R³, R⁴, R⁵, R⁶, R⁷ und R⁸ gleich oder verschieden sein können und jeweils ein Wasserstoffatom, ein Halogenatom oder einen einwertigen Kohlenwasserstoffrest mit 1 bis 5 Kohlenstoffatomen darstellen, R⁹ und R¹⁰ gleich oder verschieden sein können und jeweils einen zweiwertigen Kohlenwasserstoffrest mit 1 bis 5 Kohlenstoffatomen darstellen, R¹¹ und R¹² gleich oder verschieden sein können und jeweils ein Wasserstoffatom oder einen einwertigen Kohlenwasserstoffrest mit 1 bis 20 Kohlenstoffatomen darstellen und m und n eine Wiederholungseinheitszahl einer Oxyalkyleneinheit darstellen und auch das folgende Verhältnis 2 ≤ m + n ≤ 50 erfüllen.

## Revendications

1. Particules inorganiques traitées en surface comprenant un composé polyéther et des particules inorganiques dont la surface est traitée avec ledit composé polyéther, où ledit composé polyéther satisfait au moins une condition parmi ces conditions : (a) ledit composé polyéther a un groupe hydrocarboné cyclique, et (b) ledit composé polyéther a un indice d'hydroxyle de 30 mg de KOH/g ou moins, où ledit composé polyéther est représenté par la formule générale (2) suivante : 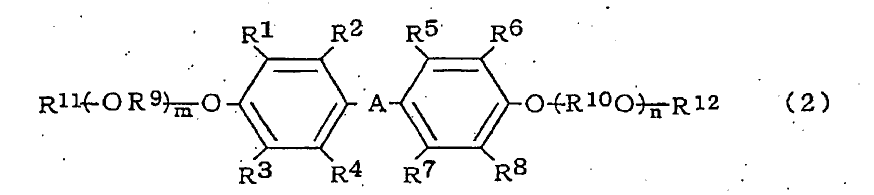 où -A- représente -O-, -S-, -SO-, -SO₂-, -CO-, un groupe alkylène ayant 1 à 20 atomes de carbone ou un groupe alkylidène ayant 6 à 20 atomes de carbone, R¹, R², R³, R⁴, R⁵, R⁶, R⁷ et R⁸ peuvent être identiques ou différents et représentent chacun un atome d'hydrogène, un atome d'halogène ou un groupe hydrocarboné monovalent ayant 1 à 5 atomes de carbone, R⁹ et R¹⁰ peuvent être identiques ou différents et représentent chacun un groupe hydrocarboné divalent ayant 1 à 5 atomes de carbone, R¹¹ et R¹² peuvent être identiques ou différents et représentent chacun un atome d'hydrogène un groupe hydrocarboné monovalent ayant 1 à 20 atomes de carbone, et m et n représentent un nombre d'unités répétées d'une unité oxyalkylène et satisfont aussi la relation suivante : 2 ≤ m + n ≤ 50.
